# EUROPEAN PATENT APPLICATION

(11) **EP 4 401 094 A1**
(43) Date of publication of application: **17.07.2024**
(21) Application number: 23151593.3
(22) Date of filing: 13.01.2023
(51) Int. Cl.: H01B 3/44, C08K 3/04, H01B 9/00

(54) **ELECTRICAL INSULATION COMPOSITION COMPRISING CARBON-BASED NANOPARTICLES**

(71) Applicant: NKT HV Cables AB, 371 60 Lyckeby (SE)
(72) Inventor: UNGE, Mikael, Västerås (SE); OLSSON, Richard, Lidingö (SE); MARKLUND, Mattias, Skellefteå (SE)
(74) Representative: Kransell & Wennborg KB

(57) **Abstract**

The present disclosure provides an electrical insulation composition comprising a polymeric matrix and carbon-based nanoparticles dispersed therein, wherein the carbon-based nanoparticles have a surface area in the range of 200-1250 m²/g and are present in an amount of 0.001-1 wt. % based on the dry weight of the electrical insulation composition.

## Description

### TECHNICAL FIELD

The present disclosure relates to the field of electrical insulation used in high voltage direct current power cables.

### BACKGROUND

High voltage direct current (HVDC) power cables are advantageous to use as they have the ability to transmit large-capacity power over a long distance while simultaneously having a smaller power loss and higher stability than alternating current power cables. However, the use of HVDC power cables puts other demands on the insulation material used. The electrical conductivity of the insulation material used in HVDC power cables is a critical consideration in the design of the cable.

Insulation material commonly used in HVDC power cables are insulating polymers such as polyethylene, wherein cross-linked low-density polyethylene (XLPE) is the most commonly used insulation material.

However, further increasing the voltage level of HVDC power cables requires the conductivity of the insulation material to be lower, contain a lower amount of space charges and have a higher electrical breakdown strength than conventional XLPE in order for the HVDC power cables to function optimally.

### SUMMARY

The inventors have realized that by dispersing carbon-based nanoparticles with a high surface area in an insulating polymeric matrix, an insulating composition with lower conductivity can be obtained.

According to a first aspect, an electrical insulation composition is provided. The electrical insulation composition comprises a polymeric matrix and carbon-based nanoparticles dispersed therein, wherein the carbon-based nanoparticles have a surface area in the range of 200-1250 m²/g and are present in an amount of 0.001-1 wt % based on the dry weight of the electrical insulation composition.

The use of carbon-based nanoparticles, exhibiting a surface area in the range of 200-1250 m²/g, in an electrical insulation composition has been shown to significantly reduce the conductivity of the electrical insulation composition and is expected to increase its breakdown strength. The effect is observed as a result of an increase in interface area between the nanoparticles and the polymeric matrix due to the high surface area of the carbon-based nanoparticles.

The carbon-based nanoparticles may have a surface area in the range of 200-1250 m²/g, preferably 500-1250 m²/g, more preferably 800-1150 m²/g.

The surface area of the carbon-based nanoparticles may be a Brunauer-Emmett-Tellers (BET) surface area. The BET surface area may be determined according to ASTM D 6556.

The carbon-based nanoparticles are preferably present in an amount of 0.001-1 wt %, preferably 0.01-0.5 wt. % based on the dry weight of the electrical insulation composition.

The carbon-based nanoparticles may have a particle size of 400 nm or less such as 1-400 nm, preferably 200 nm or less such as 5-200 nm, more preferably 100 nm or less such as 5-100 nm.

The carbon-based nanoparticles may be carbon black.

The carbon-based nanoparticles may be biobased such as nanobiochar or cellulose-based nanoparticles.

The carbon-based nanoparticles may be heat treated, preferably at temperatures >1000 °C. The heat treatment may lead to an increase in the crystallinity of the nanoparticles, which most probably is due to the breakdown of the amorphous carbon in the carbon-based nanoparticles.

The surface of the carbon-based nanoparticles may further be chemically modified. The chemical modification may occur by oxidation and/or grafting. The chemical modification may lead to a difference in electron properties and hence contribute to the insulation properties of the electrical insulation composition.

The polymeric matrix may comprise an olefin-based polymer such as low-density polyethylene (LDPE).

Preferably the conductivity of the insulating composition is <5 fS/m, more preferably <2 fS/m when measured at 60°C and after 24 h of a polarization current.

According to a second aspect, a use of an electrical insulation composition according to the first aspect, in an insulation layer of a high voltage direct current (HVDC) power cable, is provided.

According to a third aspect, a HVDC power cable is provided. The HVDC power cable comprises:
a. A conductor; and
b. An insulation layer comprising an electrical insulation composition according to the first aspect.

The polymeric matrix in the insulation layer may be cross-linked.

### BRIEF DESCRIPTION OF THE DRAWINGS

Aspects and embodiments are now described, by way of example, with reference to the accompanying drawings, in which:
Fig 1 shows a cross-section of an example of a HVDC power cable.
Fig 2 shows the conductivity of the electrical insulation composition as a function of the amount of carbon black.

Generally, all terms are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

The present disclosure provides a way to lower the conductivity of an insulating layer in a HVDC power cable by providing an electrical insulation composition based on carbon-based nanoparticles dispersed in a polymeric matrix.

The electrical insulation composition comprises carbon-based nanoparticles with a surface area of 200-1250 m²/g dispersed in a polymeric matrix. The carbon-based nanoparticles are preferably well-dispersed within the polymeric matrix meaning that they are homogeneously dispersed throughout the polymeric matrix. By dispersing the nanoparticles well in the polymeric matrix, homogenous properties of the composite and an optimal interface (avoiding particle-particle interface) between the nanoparticles and the polymeric matrix may be obtained.

The interface of the carbon-based nanoparticles and the polymeric matrix have been shown to influence the electrical insulation properties of the composition. Without wishing to be bound by any theory, it is assumed that the interface acts as a trap, attracting both electrons and holes to it as it is beneficial, from an energy perspective, for them to be at the interface. Furthermore, recombination may occur at the interface, or the electrons and holes may be transported from the interface into the nanoparticles where recombination occurs.

The carbon-based nanoparticles preferably have a particle size of 400 nm or less such as 1-400 nm, preferably 200 nm or less such as 5-200 nm, more preferably 100 nm or less such as 5-100 nm. The small size of the nanoparticles gives the particles a large surface area and thus a larger interface with the polymer matrix may be obtained. Subsequently, the larger interface contributes to a decrease in the conductivity of the electrical insulation composition.

The carbon-based nanoparticles of the present disclosure may have a surface area in the range of from 200-1250 m²/g, preferably 500-1250 m²/g, more preferably 800-1150 m²/g.

The surface area of the carbon-based nanoparticles may be a Brunauer-Emmett-Tellers (BET) surface area. The BET surface area may be determined according to ASTM D 6556.

Nanoparticles generally have a high surface area due to their small size, however, a surface area in the range of 200-1250 m²/g indicates that the carbon-based nanoparticles of the present disclosure are very porous. The high surface area contributes to a larger total interface area between the nanoparticles and the polymeric matrix and hence a better performance of the electrical insulation composition, i.e., reduced conductivity and an expected increased breakdown strength, is obtained.

In addition to contributing to an increased interface, a high porosity may contribute to the trapping of volatile substances such as ions in the electrical insulation composition which may otherwise contribute to an increased conductivity.

The carbon-based nanoparticles are present in an amount of 0.001-1 wt.%, preferably 0.01-1 wt.%, more preferably 0.01-0.5 wt. % based on the dry weight of the electrical insulation composition. The amount of nanoparticles needed to obtain a reduction in conductivity is considerably smaller than when using nanoparticles based on e.g., metal oxides where it is common to use amounts of up to 5 wt. % based on the dry weight of the electrical insulation composition. For the carbon-based nanoparticles exhibiting a surface area in the range of 200-1250 m²/g, a decrease in conductivity can be observed at as low amounts as 0.001 wt. %. The reason for the carbon-based nanoparticles of the present disclosure being more effective at lower amounts may be due to their high surface area (due to high porosity) which is contributing to the interface between the carbon-based nanoparticles and the polymeric matrix.

The carbon-based nanoparticles may be carbon black. Carbon black is a colloidal carbon material that typically has a spherical shape and is most commonly present as aggregates of the spheres. Carbon black may be produced by thermal decomposition of hydrocarbon compounds. In contrast to commonly used carbon blacks, the carbon blacks used in the present disclosure are highly porous as indicated by the high surface area of 200-1250 m²/g. It is advantageous to use carbon black due to its low cost and availability.

The carbon black nanoparticles may be heat treated prior to use. The heat treatment may comprise subjecting the carbon black to temperatures >1000 °C, preferably >2000 °C. The heat treatment may consume parts of the amorphous carbon black and thereby increase the crystallinity of the nanoparticles. The heat treatment may lead to the formation of graphite. The heat treatment may further reduce internal stresses that may be present in the carbon-based nanoparticles.

The carbon-based nanoparticles may have a high crystallinity, which may be intrinsic to the carbon-based nanoparticles or obtained by heat treatment of the nanoparticles. The high crystallinity may lead to a larger difference in electron properties (band gaps) between the carbon-based nanoparticles and the polymeric matrix and thereby reduce the conductivity of the electrical insulation composition. In addition, it is believed that a high crystallinity may create distinct places for recombination of electrons and holes and thereby further improve the insulating properties of the electrical insulation composition. The highly crystalline carbon-based nanoparticles also have well-defined properties, making them easier to handle.

The carbon-based nanoparticles may be biobased. Nanobiochar and cellulose-based nanoparticles, such as nanocrystalline cellulose (NCC) can be used as biobased carbon-based nanoparticles. Biobased carbon-based nanoparticles may be preferred from an environmental aspect due to being renewable.

The surface of the carbon-based nanoparticles may be chemically modified in order to further contribute to the difference in electron properties of the carbon-based nanoparticles and the polymeric matrix. The surface is preferably chemically modified by oxidation and/or grafting. Oxidation of the surface may create deep traps while grafting may be used to introduce energy absorbing groups and/or deep traps which may lead to increased breakdown strength.

The polymeric matrix may be any polymer suitable for use in an electrical insulation composition. Preferably, the polymeric matrix comprises an olefin-based polymer such as polyethylene (PE) and polypropylene (PP). The polymeric matrix may be a combination of PE and PP. The polyethylene may be ultra-low-density polyethylene (ULDPE), low-density polyethylene (LDPE), middle-density polyethylene (MDPE), high-density polyethylene (HDPE), or a combination thereof. The polymeric matrix is preferably cross-linked LDPE, XLPE, due to its physical properties, cost and availability.

State of the art LDPE used as an insulation material for electrical insulation has a relatively low conductivity of approximately 10-100 fS/m depending on the temperature. However, HVDC power cables require a lower conductivity of the insulation material to function optimally when voltage levels are increased. The addition of carbon-based nanoparticles according to the present disclosure can lower the conductivity of the electrical insulation composition by up to 20 times making it ideal for HVDC power cables. The conductivity of the electrical insulation composition, comprising carbon-based nanoparticles with a surface area in the range of 200-1250 m²/g, is preferably <5 fS/m at 60 °C and after 24 h of a polarization current but may be as low as 0.4 fS/m. The conductivity measurements are performed by applying a voltage over the sample in order to polarize the material, measuring the leakage current using an electrometer and calculating the apparent conductivity.

The conductivity of the electrical insulation composition according to the present disclosure is lower than the conductivity of the polymeric matrix itself, i.e., the addition of carbon-based nanoparticles lowers the conductivity of the insulating polymeric matrix.

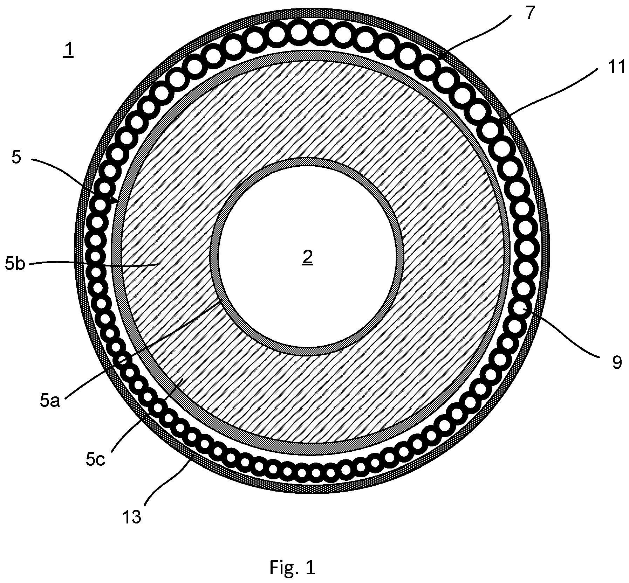

Fig. 1 shows a cross-sectional view of an HVDC power cable 1. The HVDC power cable 1 comprises a first electrical conductor 2. The first electrical conductor 2 may be stranded.

The HVDC power cable comprises an insulation system 5 arranged around the first electrical conductor 2.

The insulation system 5 comprises an insulation layer 5b. The insulation layer 5b comprises the electrical insulation composition.

The electrical insulation composition may be prepared by first adding the carbon-based nanoparticles to the polymeric matrix and compounding them in order to obtain the electrical insulation composition, i.e., a polymeric matrix with carbon-based nanoparticles homogeneously dispersed therein. After the electrical insulation composition is obtained, it can be extruded to form the insulation layer 5b. During and/or after the extrusion, the polymeric matrix in the electrical insulation composition may be cross-linked. The cross-linking may be performed using conventional cross-linking techniques suitable for the polymeric matrix used. The cross-linking may improve the mechanical properties of the insulation layer 5b.

The carbon-based nanoparticles may be added to the polymeric matrix via a masterbatch of the carbon-based nanoparticles in order to facilitate the addition.

The insulation system 5 may further comprise an inner semi-conducting layer 5a arranged around the first electrical conductor 2 radially inwards of the insulation layer 5b. Thus, if the insulation system 5 comprises an inner semi-conducting layer 5a, the inner semi-conducting layer 5a may be arranged around the conductor and the insulation layer 5b may be arranged around the inner semi-conducting layer 5a. The inner semi-conducting layer 5a may be a conductor screen.

The insulation system 5 may further comprise an outer semi-conducting layer 5c arranged around the insulation layer 5b. The outer semiconducting layer 5c may be an insulation screen.

The insulation system 5 comprising an inner semi-conducting layer 5a, an insulating layer 5b and an outer semi-conducting layer 5c, may be triple extruded. Thus, the three layers of the insulation system 5 are extruded simultaneously. The insulation system 5 is extruded so that it is arranged around the electrical conductor 2.

The HVDC power cable 1 may be a submarine HVDC power cable. The HVDC power cable 1 may than further comprise an armouring layer 7 arranged around the insulation system. The armouring layer may comprise a plurality of elongated armour elements 9. The elongated elements 9 may comprise metal and/or a polymeric material. The HVDC power cable 1 could alternatively be a land cable. HVDC power cable 1 may according to some examples be without an armouring layer.

The HVDC power cable 1 may further comprise a corrosion protection layer 11 arranged to cover the armouring layer 7.

The HVDC power cable 1 may further comprise an outer layer 13 which forms the outermost layer of the HVDC power cable 1. The outer layer 13 may according to one example be arranged around the corrosion protection layer 11 and forms the external surface of the HVDC power cable 1. The outer layer 13 may comprise a polymeric material such as polypropylene yarn which is wound around the corrosion protection layer or may be an extruded layer.

### EXAMPLES

### Example 1

Electrical insulation compositions of the present disclosure were prepared by using a low-density polyethylene (LDPE) as the polymeric matrix and carbon black nanoparticles as the carbon-based nanoparticles.

PRINTEX^{®} XE₂ B from Orion was used as the carbon black nanoparticles. The carbon black nanoparticles had a BET surface area of 1000 m²/g as determined according to ASTM D 6556 and a particle size of 30 nm.

LE6222 from Borealis was used as the LDPE. The LPDE had a number average molecular weight of 14 kDa and 1.4 branches per 100 backbone carbon atoms.

### Preparation of the electrical insulating compositions

The LPDE was first cryo-grinded to a powder prior to mixing into the electrical insulation composition. The cryo-grinding was preformed by quenching the LDPE pellets in liquid nitrogen for 1h followed by cryo-grinding in a Retsch ZM 200 grinder at 12 000 rpm to produce an LPDE powder. The LDPE powder was mixed with the carbon black nanoparticles prior to compounding by extrusion. The LDPE and carbon black mixtures were shaken for 1 h in a Vortex Genie 2 Shaker G560E from Scientific Industries, dried overnight at 80 °C and shaken for 30 minutes prior to extrusion. The compounding of the mixtures was performed using a Micro 5cc Twin Screw Compounder at 150 °C with 100 rpm for 6 min. In addition to the LDPE and carbon black, the electrical insulation compositions further comprised an antioxidant (added to the mixture prior to extrusion) in an amount of 0.02 wt.% based on the dry weight of the electrical insulation composition.

After extrusion, the electrical insulation composition was pelletized and vacuum dried in a Vacucell oven from MMM Group prior to being compression moulded into 0.3 mm thick sheets with a diameter of 75 mm. The compression moulding was performed using a LabPro 400 from Frontlijne Grotnes. The compression moulding sequence was as followed: heating at 130 °C for 10 min, pressing at 200 kN for 10 min and decreasing the temperature to 30 °C for 6 min while maintaining the same force.

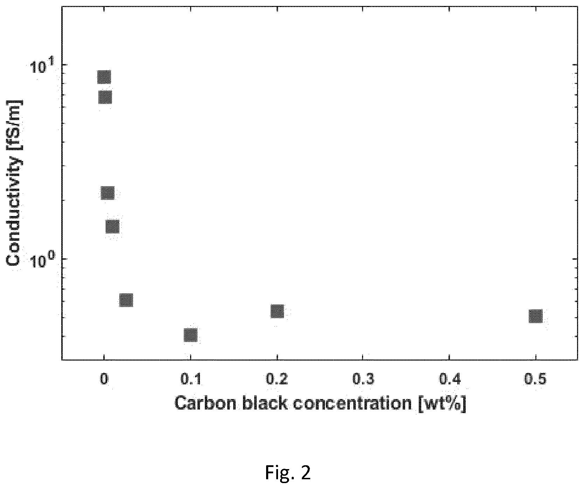

Seven electrical insulation compositions with different amounts of carbon black (CB1-CB7) were prepared together with a reference composition comprising only LDPE (LDPE ref), see table 1 and fig 2. For amount of carbon black below 0.1 wt.%, a masterbatch of carbon black in LDPE was prepared from which the carbon black was added to the LDPE. The masterbatch comprised 0.1 wt.% carbon black.

**Table 1. Electrical insulation compositions of example 1 and their conductivity.**

| Electrical insulation compositions | Carbon black (wt.%) | Conductivity [fS/m]* |
|---|---|---|
| LDPE ref | 0 | 8.6 |
| CB1 | 0.001 | 6.8 |
| CB2 | 0.004 | 2.2 |
| CB3 | 0.01 | 1.5 |
| CB₄ | 0.025 | 0.6 |
| CB₅ | 0.1 | 0.4 |
| CB6 | 0.2 | 0.5 |
| CB7 | 0.5 | 0.5 |

| | | |
|---|---|---|
| * The conductivity is measured at 60 °C and after 24 h of a polarization current. | | |

### Measurement of the conductivity of the electrical insulation compositions

The conductivity of the electrical insulation compositions was determined by measuring the leakage current. The measurements were carried out at 60 °C with an applied direct current electric field of 30 kV/mm. The measurement setup comprised a HCP 35-12500 (FUG) high voltage supply and a 6517B (Keithley) electrometer with an over voltage protection connected to a shieled three-electrode system. The leakage current data was obtained by a LabVIEW software.

### Evaluation of the electrical insulation compositions

All evaluated electrical insulation compositions (CB₁-CB₇) exhibited a significant lowering of conductivity compared to the LDPE reference (LDPE ref). The conductivity of the electrical insulation compositions decreased with an increase in the amount of carbon black until 0.1 wt% was reached (CB₁-CB₅). Surprisingly, for the following amount, 0.2 and 0.5 wt.% (CB6 and CB₇ respectively), an increase in conductivity was observed compared to the lower amounts (CB₁-CB₅). This indicates that the conductivity of the electrical insulation compositions may reach a minimum at ~0.1 wt.%.

This shows that using carbon-based nanoparticles with a high surface area in an electrical insulation composition significantly lowers its conductivity.

Thus, while various aspects and embodiments have been disclosed herein, other aspects and embodiments will be apparent to those skilled in the art. The various aspects and embodiments disclosed herein are for purposes of illustration and are not intended to be limiting, with the scope being defined by the following claims.

## Claims

1. An electrical insulation composition comprising a polymeric matrix and carbon-based nanoparticles dispersed therein, wherein the carbon-based nanoparticles have a surface area in the range of 200-1250 m²/g and are present in an amount of 0.001-1 wt. % based on the dry weight of the electrical insulation composition.

2. The electrical insulation composition according to claim 1, wherein the carbon-based nanoparticles are present in an amount of 0.01-1 wt.%, preferably 0.01-0.5 wt. % based on the dry weight of the electrical insulation composition.

3. The electrical insulation composition according to claim 1 or 2, wherein the surface area of the carbon-based nanoparticles is in the range of 500-1250 m²/g such as 800-1150 m²/g.

4. The electrical insulation composition according to claims 1-3, wherein the carbon-based nanoparticles have a particle size of 400 nm or less, such as 200 nm or less, such as 100 nm or less.

5. The electrical insulation composition according to any one of the previous claims wherein the carbon-based nanoparticles are carbon black.

6. The electrical insulation composition according to claims 1-4 wherein the carbon-based nanoparticles are biobased.

7. The electrical insulation composition according to any one of the previous claims wherein the carbon-based nanoparticles have been heat treated.

8. The electrical insulation composition according to any one of the previous claims wherein the surface of the carbon-based nanoparticles is chemically modified.

9. The electrical insulation composition according to claim 8, wherein the surface is chemically modified by oxidation and/or grafting.

10. The electrical insulation composition according to any one of the previous claims wherein the polymeric matrix comprises an olefin-based polymer such as low-density polyethylene.

11. The electrical insulation composition according to any one of the previous claims wherein the conductivity of the electrical insulation composition at 60 °C and after 24 h polarization current is <5 fS/m.

12. A use of an electrical insulation composition according to any one of claims 1-11 in an insulation layer of a high voltage direct current power cable.

13. A high voltage direct current power cable comprising:
a. A conductor (2); and
b. An insulation layer (5b) comprising an electrical insulation composition according to anyone of claims 1-11.

14. The high voltage direct current power cable according to claim 13, wherein the polymeric matrix of the electrical insulation composition is cross-linked.
